# EUROPÄISCHE PATENTSCHRIFT

(11) **EP 2 699 364 B1**
(45) Veröffentlichungstag und Bekanntmachung des Hinweises auf die Patenterteilung: **12.08.2015**
(21) Anmeldenummer: 12718253.3
(22) Anmeldetag: 04.05.2012
(51) Int. Cl.: B21B 38/04, G01B 15/02, G01B 17/02

(54) **VERFAHREN SOWIE VORRICHTUNG ZUR BESTIMMUNG EINER DICKE EINES WALZGUTS**
METHOD AND DEVICE FOR DETERMINING A THICKNESS OF ROLLING STOCK
PROCÉDÉ ET DISPOSITIF PERMETTANT DE DÉTERMINER L'ÉPAISSEUR D'UN PRODUIT LAMINÉ

(30) Priorität: 25.05.2011 EP 11167480
(43) Veröffentlichungstag der Anmeldung: 26.02.2014
(73) Patentinhaber: Primetals Technologies Germany GmbH, 91052 Erlangen (DE)
(72) Erfinder: MAIERHOFER, Andreas, 91080 Marloffstein (DE)
(74) Vertreter: Metals@Linz
(86) Internationale Anmeldenummer: PCT/EP2012/058252
(87) Internationale Veröffentlichungsnummer: WO 2012/159870

(56) Entgegenhaltungen:
- EP-A1- 1 369 664
- WO-A2-02/088623
- DE-A1- 2 600 154

## Beschreibung

Die Erfindung betrifft ein Verfahren zur Bestimmung einer Dicke eines Walzguts, insbesondere eines Walzbandes oder einer Metallplatte. Die Erfindung betrifft weiterhin eine Vorrichtung zur Bestimmung einer Dicke eines derartigen Walzguts.

In Prozesslinien, wie z.B. in Walzwerken, werden überwiegend Dickenmessungen auf Basis der Durchdringung des zu messenden Materials mittels Strahlung, z.B. Gammastrahlung oder Röntgenstrahlung, verwendet. Die Dickenmessung mit Strahlen beruht auf dem Effekt, dass Strahlung beim Durchdringen von Materie teilweise absorbiert wird. Dazu wird der Strahl einer Strahlungsquelle senkrecht auf das Messgut gerichtet. Bei bekannter Dichte des Messguts wird mit Hilfe des Absorptionsgesetzes die Dicke des Messguts an dieser Stelle bestimmt. Um Messergebnisse mit einer sehr hohen Genauigkeit zu gewinnen, müssen jedoch viele Faktoren und Parameter bekannt sein, z.B. Legierungsbestandteile, Temperatur des Messgutes, etc.. Diese Werte werden dem Messgerät zur Verfügung gestellt. Bei unterschiedlichen Zusammensetzungen eines Messgutes an unterschiedlichen Stellen im Material, bei nicht genau bekannter Zusammensetzung oder bei Schwankungen der Temperatur des Messgutes kann daher die Dickenmessung ungenaue Messergebnisse liefern.

Eine alternative Methode zur Dickenmessung ist die Ermittlung der Dicke des Messguts über sein Gewicht. Dafür müssen Messgutproben gezogen werden, die im Labor ausgewertet werden. Diese Vorgehensweise ist zeitaufwendig und führt zu Produktionsstörungen.

Die WO 02/088623 A2 offenbart ein System und ein Verfahren zur Messung der Dicke flacher Bänder im Bereich einer Produktionsstraße, wobei die Messergebnisse zu Einstellung des Produktionsverfahrens verwendet werden.

Die EP 1369664 A1 beschreibt offenbart ein Verfahren zur Bestimmung der Exzentrizität eines Hohlblocks mittels mindestens einer Messeinrichtung, die die Wanddicke des Hohlblocks an einer Längen- und Umfangsposition ermitteln kann.

Die DE 2600154 A1 offenbart ein Verfahren und eine Vorrichtung zum Messen der Dicke flächigen Guts mittels Schallschwingungen, bei dem das Messgut in einem schallleitenden Medium angeordnet ist.

Der Erfindung liegt die Aufgabe zugrunde, eine Verbesserung der Messgenauigkeit bei der Bestimmung der Dicke eines Walzguts zu ermöglichen.

Diese Aufgabe wird erfindungsgemäß gelöst durch ein Verfahren zur Bestimmung einer Dicke eines Walzguts, insbesondere eines Walzbandes oder einer Metallplatte, beim Walzen des Walzgutes mittels einer Walzstrasse,
- wobei ein Grundmesswert für die Dicke mit Hilfe eines Strahlungsmesssystems berührungslos gemessen wird, wobei das Strahlungsmesssystems in der Walzstrasse integriert ist,
- wobei ein Referenzmesswert für die Dicke mittels Ultraschall-Messkopfs gemessen wird, der ebenfalls in der Walzstrasse integriert ist, und
- wobei der Referenzmesswert zur Eliminierung von Fehlereinflüssen auf den Grundmesswert herangezogen wird.

Die Aufgabe wird außerdem erfindungsgemäß gelöst durch eine Vorrichtung zur Bestimmung einer Dicke eines Walzguts, insbesondere eines Walzbandes oder einer Metallplatte, umfassend
- ein berührungsloses Strahlungsmesssystem zum Erhalten eines Grundmesswerts für die Dicke, wobei das Strahlungsmesssystem in der Walzstrasse integriert ist,
- einen Ultraschall-Messkopf zum Erhalten eines Referenzmesswerts für die Dicke, der ebenfalls in der Walzstrasse integriert ist,
- sowie umfassend eine Analyseeinheit Eliminierung von Fehlereinflüssen auf den Grundmesswert anhand des Referenzmesswertes.

Die in Bezug auf das Verfahren nachstehend aufgeführten Vorteile und bevorzugten Ausgestaltungen lassen sich sinngemäß auf die Vorrichtung übertragen.

Die Erfindung basiert auf der Idee, am Ort, an dem die Strahlungsmessung zur Bestimmung der Dicke des Walzgutes durchgeführt wird, eine Referenzmessung durchzuführen, deren Ergebnisse zur Korrektur des Grundmesswertes aus der Strahlungsmessung herangezogen werden. Dies bedeutet, dass die Referenzmessung stattfindet, wenn sich das Walzgut noch in der Walzstrasse befindet. Durch die Referenzmessung werden Messungenauigkeiten aufgrund von Temperaturschwankungen oder lokalen Unterschieden in der Zusammensetzung des Walzguts beseitigt.

Als Referenzmessung ist hierbei eine Ultraschallmessung vorgesehen, bei der eine Probenentnahme aus dem Walzgut nicht erforderlich ist, so dass die Ultraschallmessung parallel zur Strahlungsmessung und am Ort der Strahlungsmessung durchgeführt wird. Messungen von Materialdicken mittels Ultraschall sind an sich bekannt. Bei diesen Messungen werden Ultraschallimpulse von einem Ultraschall-Messkopf auf das Messobjekt ausgesendet und pflanzen sich dort fort. Wenn der Ultraschallimpuls die Rückwand des Messobjekts erreicht hat, wird ein Teil des Ultraschalls reflektiert. Die Bestimmung der Dicke des Messobjekts ergibt sich aus der genaueren Messung der Zeit zwischen dem Auslösen des Sendeimpulses und dem Empfang des Rückwandechos. Aus dieser Zeit wird die Dicke des Messobjekts berechnet.

Neuartig bei den erfindungsgemäßen Verfahren und Vorrichtung zur Bestimmung der Dicke eines Walzguts ist die Anwendung der Ultraschallmessung am Ort der Bearbeitung des Walzgutes. Der wesentliche Vorteil ist hierbei, dass der für die Referenzmessung notwendige Zeitaufwand sehr gering, so dass die Referenzmessung mittels Ultraschall problemlos in den Verarbeitungsprozess des Walzguts integriert werden kann. Darüber hinaus wird das Walzgut durch die Ultraschallmessung nicht zerstört oder verändert.

Die Anordnung das Strahlungsmesssystems und des Ultraschall-Messkopfes kann auf mehrere Weisen erfolgen. Für beide Systeme ist es wichtig, dass sie möglichst nah an einem Walzgerüst der Walzstrasse positioniert sind. Das Strahlungsmesssystem kann dabei im Walzgerüst eingebaut sein. In diesem Fall ist der Ultraschall-Messkopf vorteilhafterweise ebenfalls im Walzgerüst eingebaut. Wenn am Walzgerüst kein Platz für den Ultraschall-Messkopf vorhanden ist, kann der Ultraschall-Messkopf über eine eigene Halterung in der Nähe des Strahlungsmesssystems und somit des Walzgerüsts positioniert sein. Nach einer alternativen, bevorzugen Ausführung werden eine Strahlungsquelle und ein Strahlungsdetektor des Strahlungsmesssystems von einer Haltemechanik getragen, wobei der Ultraschall-Messkopf ebenfalls an der Haltemechanik angeordnet ist. Die Haltemechanik ist hierbei insbesondere nach Art eines sogenannten C-Messbügels ausgebildet. Ein derartiger C-Messbügel weist zwei Arme, die insbesondere parallel verlaufen, und einen mittleren Teil auf, der die beiden Arme miteinander verbindet. An einem dieser Arme ist die Strahlungsquelle und am anderen der Strahlungsdetektor angeordnet. Im Betrieb erstrecken sich die Arme der Haltemechanik insbesondere quer zur Walzrichtung, d.h. zur Richtung in der das Walzband oder die Metallplatte verfahren wird.

Gemäß einer bevorzugten Ausgestaltung wird der Ultraschall-Messkopf zum Messen der Dicke des Walzgutes zum Walzgut hin verfahren. Im Gegensatz zur Messung mittels des Strahlungsmesssystems, die berührungslos erfolgt, ist für die Ultraschallmessung in der Regel ein Kontakt zwischen dem Ultraschall-Messkopf und dem Walzgut erforderlich. Das Strahlungsmesssystem ist für gewöhnlich stationär angeordnet und die Arme des c-Messbügels erstrecken sich sowohl unterhalb als auch oberhalb des laufenden Walzguts. So kann die Strahlung senkrecht zum Walzgut emittiert und nach dem Durchdringen des Materials des Walzgutes auf der anderen Seite detektiert werden. Damit der Ultraschall-Messkopf, der in der Nähe der Strahlungsquelle oder des Strahlungsdetektors angeordnet ist, das Walzgut kontaktiert, wird dieser in Richtung des Walzgutes verfahren, bis er das Walzgut berührt. Da die Haltemechanik von ihrer Betriebsposition aus während der Strahlungsmessung in Bezug auf das Walzgut räumlich nicht verstellt wird, wird der Ultraschall-Messkopf, wenn er in der Haltemechanik des Strahlungssystem integriert ist, über eine eigene Bewegungsmechanik aus dem Arm der Haltemechanik herausgefahren.

Damit weder die Oberfläche des Walzguts noch der Ultraschall-Messkopf durch den Kontakt beschädigt wird, wird der Referenzwert vorteilhafterweise am stehenden Walzgut gemessen. Denkbar ist jedoch auch am laufenden Walzgut zu messen, insbesondere wenn die Geschwindigkeit des Walzgutes etwas reduziert wird.

Die Strahlungsmessung mittels des Strahlungsmesssystems erfolgt bevorzugt in kurzen Zeitabständen von wenigen Sekunden oder Teilen einer Sekunde, insbesondere wird die berührungslose Strahlungsmessung kontinuierlich am laufenden Walzgut durchgeführt. Da die Strahlungsmessung am laufenden Band durchgeführt wird und das Walzgut für die Ultraschallmessung angehalten wird, erfolgt die Ultraschallmessung vorteilhafterweise in größeren Zeitabständen als die Strahlungsmessung. Beim Walzen eines Walzbands kann dieses beispielsweise nach 10 Metern oder 20 Metern angehalten werden, um die Ultraschall-Messung durchzuführen. Wenn Metallplatten oder Bänder gewalzt werden, erfolgt die Ultraschallmessung insbesondere einmal am Anfang jeder Platte oder jedes Bandes oder ein Mal pro Charge. Der Referenzwert wird insbesondere im Kopfbereich des Bandes oder der Platte gemessen, nachdem dieser Bereich wenigstens an einem Walzgerüst gewalzt wurde, danach wird der Walzvorgang ungestört fortgesetzt.

Nach einer bevorzugten Ausführungsvariante wird der Referenzwert an einer Messstelle gewonnen, an der auch ein Grundmesswert gemessen wird. Insbesondere wird der Referenzmesswert an der Stelle gemessen, an der die jeweils letzte Messung mit dem Strahlungsmesssystem erfolgt ist. Die "gleiche Stelle" ist hierbei bezogen wenigstens auf die Breite des Walzgutes, d.h. dass das Strahlungsmesssystem und der Ultraschall-Messkopf in Walzrichtung insbesondere hintereinander angeordnet sind und entlang einer sich in Walzrichtung erstreckenden Linie messen. Vorzugsweise messen das Strahlungsmesssystem und der Ultraschall-Messkopf entlang der Mittellinie des Walzgutes. Dies erhöht die Genauigkeit der Dickenmessung, da sich der Referenzmesswert auf eine Stelle bezieht, an der bereits ein Grundmesswert gemessen wurde. Die Strahlungsmessung und die Ultraschallmessung erfolgen beispielsweise zeitlich hintereinander, d.h. dass bis zum Anhalten des Walzgutes nur mit dem Strahlungsmesssystem gemessen wird und insbesondere an der letzten Messstelle, an der ein Grundmesswert gewonnen wurde, am stehenden Walzgut die Ultraschallmessung durchgeführt wird. Alternativ werden ein Grundmesswert und eine Referenzmesswert gleichzeitig am stehenden Walzgut gemessen, insbesondere wenn an zwei verschieden Stellen des Walzgutes gemessen wird.

Gemäß einer bevorzugten Ausgestaltung ist das Strahlungsmesssystem ein Röntgenmesssystem und die Grundmesswerte werden mittels Röntgenstrahlen gemessen. Der große Vorteil einer Röntgenstrahlungsquelle ist, dass die Energie der Strahlung und damit die Absorptionskonstante optimal an den erforderlichen Dickenbereich angepasst werden kann. Ein solches berührungsloses Strahlungsmessverfahren liefert bei sehr hohem Messtakt äußert präzise Messergebnisse, was es besonders geeignet für den Einsatz in Walzwerken in der Aluminium- und Stahlindustrie macht. Alternativ kann auch mit Isotopen- oder Gammastrahlung gemessen werden.

Nach einer bevorzugten Variante wird bei Abweichungen des Referenzmesswertes vom Grundmesswert innerhalb eines vorgegebenen Toleranzbereichs ein Ist-Wert für die Dicke herausgegeben, der aus dem Grundmesswert und dem Referenzmesswert gebildet ist. Der Toleranzbereich beträgt beispielsweise 10 % vom Grundmesswert. Wenn der Unterschied zwischen dem Grundmesswert und dem Referenzmesswert außerhalb des Toleranzbereichs liegt, d.h. insbesondere größer als 10 % ist, ist dies ein Zeichen dafür, dass eine der Messungen nicht richtig erfolgt ist. Wenn jedoch die Abweichung des Referenzmesswertes vom Grundmesswert minimal ist, insbesondere kleiner als 10 %, so wird der Grundmesswert an den genaueren Referenzmesswert adaptiert. Die Differenz zwischen einem aktuelle Referenzmesswert und dem letzten Grundmesswert gewonnen vor dem aktuellen Referenzmesswert wird bei den darauffolgenden Strahlungsmessungen berücksichtigt, indem diese Differenz zu den neuen Messwerten addiert wird. Dies wird gemacht bis zur nächsten Kalibrierung der Grundmesswerte. Alternativ ist es möglich den Referenzmesswert mit dem darauf folgenden ersten Grundmesswert zu vergleichen und die daraus gebildete Differenz zur Adaption der weiteren Grundmesswerte zu benutzen.

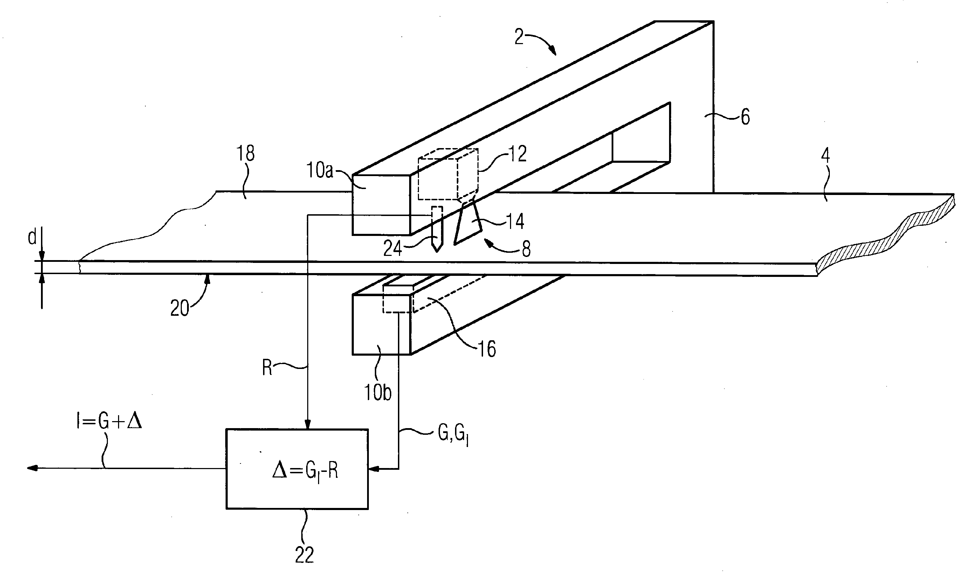

Ein Ausführungsbeispiel der Erfindung wird anhand einer Zeichnung näher erläutert. Hierin zeigt die einzige FIG eine Vorrichtung 2 zur Durchführung einer Referenzdickenmessung an einem Walzband 4. Anstelle des Walzbandes 4 kann die Vorrichtung 2 verwendet werden, um die Dicke eines anderen Walzguts, wie z.B. einer Metallplatte, zu bestimmen.

Die Vorrichtung 2 umfasst eine Haltemechanik 6 für ein berührungsloses Strahlungsmesssystem 8, welches in diesem Ausführungsbeispiel ein Röntgenmesssystem ist. Die Haltemechanik 6 ist nach Art eines C-Messbogens ausgebildet und weist zwei sich parallel zueinander erstreckende Arme 10a, 10b auf, die vom Walzband 4 beabstandet sind, so dass das Band 4 zwischen ihnen verläuft. Im oberen Arm 10a ist eine Röntgenstrahlungsquelle 12 eingebaut, die einen Röntgenstrahl oder Röntgenstrahlenfächer 14 erzeugt. Der Röntgenstrahl 14 ist senkrecht auf das Walzband 4 gerichtet und durchdringt dieses. Dabei ändert sich die Intensität des Röntgenstrahls 14 hinter dem Walzband 4. Die Restintensität des Röntgenstrahls 4 wird von einem Röntgendetektor 16 gemessen, der im unteren Arm 10b des C-Messbügels 6 integriert ist.

Mittels der berührungslosen Röntgenstrahlenmessung wird eine Dicke d des Walzbandes 4 bestimmt. Unter Dicke wird hierbei eine Schichtdicke zwischen einer Oberseite 18 und einer Unterseite 20 des horizontal verlaufenden Walzbandes 4 verstanden. Die Röntgenstrahlenmessung erfolgt insbesondere kontinuierlich am laufenden Walzband 4. Es wird dabei eine Vielzahl von aktuellen Grundmesswerten G ermittelt, die von dem Röntgendetektor 16 an eine Analyseeinheit 22, die in der FIG symbolisch gezeigt ist, geliefert wird. Insbesondere werden somit mehrere aktuelle Grundmesswerte G pro Sekunde gewonnen. Die Dickenmessung mittels Röntgenstrahlung weist jedoch den Nachteil auf, dass die Messergebnisse von vielen Parameter wie z.B. von den Legierungsbestandteilen oder der Temperatur des Walzbandes 4 abhängen. Lokale Schwankungen dieser Parameter können somit die Messergebnisse verfälschen. Um jedoch eine möglichst präzise Dickenmessung zu ermöglichen, ist als Referenzmesssystem ein Ultraschall-Messsystem vorgesehen. Das Referenzmesssystem umfasst einen Ultraschall-Messkopf 24, der ebenfalls im C-Messbügel 6 integriert ist. Zur Durchführung der Ultraschallmessung ist ein Kontakt zwischen dem Ultraschall-Messkopf 24 und dem Walzband 4 erforderlich, aus diesem Grund weist das Ultraschall-Messsystem eine hier nicht näher gezeigte Bewegungsmechanik auf, mit deren Hilfe der Ultraschall-Messkopf 24 aus dem Arm 10a des C-Messbügels 6 in Richtung des Walzbandes 4 herausgefahren werden kann.

Um die Oberfläche des Walzbandes 4 bzw. den Ultraschall-Messkopf 24 durch den Kontakt mit dem Walzband 4 nicht zu beschädigen, werden die Ultraschallmessungen durchgeführt, wenn das Walzband 4 steht. Die Ultraschallmessungen werden somit in größeren Zeitabständen als die Röntgenstrahlungsmessungen durchgeführt. Beispielsweise werden die Ultraschallmessungen ein Mal pro Walzband 4 oder ein Mal pro Charge ab Walzbändern gemessen. Gemessen wird dabei insbesondere im Kopfbereich des Walzbandes am Anfang des Walzvorganges, damit der weitere Walzvorgang ununterbrochen fortgesetzt wird.

Ein Referenzmesswert R, gewonnen mit Hilfe des Ultraschall-Messkopfs 24, wird ebenfalls wie die Grundmesswerte G der Analyseeinheit 22 zugeführt. Der Referenzmesswert R wird insbesondere an der gleichen Messstelle abgelesen, an der ein letzter Grundmesswert Gₗ vor der Ultraschallmessung ermittelt wurde. Die Analyseeinheit 22 bildet eine Differenz Δ zwischen dem letzten gemessenen Grundmesswert Gₗ und dem Referenzmesswert R. Wenn diese Differenz Δ innerhalb eines Toleranzbereichs von ca. 10 % des letzten Grundmesswerts liegt, wird jeder weitere aktuelle Grundmesswert G an den letzten Referenzmesswert R adaptiert, indem die Analyseeinheit 22 einen Ist-Wert I für die Dicke d ausgibt, der sich aus dem aktuell gemessenen Grundmesswert G und der letzten berechneten Differenz Δ zusammensetzt. Die Berechnung einer neuen Differenz Δ wird iterativ fortgesetzt, indem immer wieder Ultraschallmessungen durchgeführt werden und die Ergebnisse der Dickenmessung durch Röntgenstrahlen an verschiedenen Stellen, dargestellt durch die Ist-Messwerte I, an den jeweils letzten Referenzmesswert R angepasst werden.

Alternativ kann der Referenzmesswert R oder der Fehler zwischen der Grund- und der Referenzmessung, der der Differenz Δ entspricht, verwendet werden, um einen Parameter zu korrigieren, wie z.B. eine Adaption der Kurve für den Temperaturdrift oder Legierungsanteil durchzuführen.

Der Vergleich zwischen dem Grundmesswert G und dem Referenzmesswert G kann auch zur Überwachung der Dicke des Walzbandes 4 verwendet werden, indem der Ist-Wert oder der Referenzwert ausgegeben wird und parallel dazu auch die Differenz Δ angezeigt wird. Beispiel: ein Bediener kann dabei alarmiert werden, wenn die Differenz Δ zu groß ist und insbesondere außerhalb des Toleranzbereichs liegt.

Ein derartiges Verfahren zur Bestimmung der Dicke d des Walzbandes 4 zeichnet sich dadurch aus, dass die Referenzmessung noch vor Ort beim Walzen des Walzbandes 4 durchgeführt wird und dabei besonders schnell hochgenaue Messergebnisse liefert, die zur Eliminierung von Fehlereinflüssen bei der Messung mittels des Strahlungsmesssystems 8 herangezogen werden.

## Patentansprüche

1. Verfahren zur Bestimmung einer Dicke (d) eines Walzguts (4), insbesondere eines Walzbandes oder einer Metallplatte, beim Walzen des Walzgutes (4) mittels einer Walzstrasse, bei dem
- ein Grundmesswert (G) für die Dicke (d) mit Hilfe eines Strahlungsmesssystems (8) berührungslos gemessen wird, wobei das Strahlungsmesssystems (8) in der Walzstrasse integriert ist,
**dadurch gekennzeichnet, dass**
- ein Referenzmesswert (R) für die Dicke (d) mittels eines Ultraschall-Messkopfs (24) gemessen wird, der ebenfalls in der Walzstrasse integriert ist, und
- der Referenzmesswert (R) zur Eliminierung von Fehlereinflüssen auf den Grundmesswert (G) herangezogen wird.

2. Verfahren nach einem der vorhergehenden Ansprüche,
**dadurch gekennzeichnet, dass** eine Strahlungsquelle (12) und ein Strahlungsdetektor (16) des Strahlungsmesssystems (8) von einer Haltemechanik (6) getragen werden, wobei der Ultraschall-Messkopf (24) an der Haltemechanik (4) angeordnet ist.

3. Verfahren nach einem der vorhergehenden Ansprüche,
**dadurch gekennzeichnet, dass** der Ultraschall-Messkopf (24) zum Messen der Dicke (d) des Walzgutes (4) zum Walzgut (4) verfahren wird.

4. Verfahren nach einem der vorhergehenden Ansprüche,
**dadurch gekennzeichnet, dass** die Strahlungsmessung mittels des Strahlungsmesssystems (8) in kurzen Zeitabständen von wenigen Sekunden oder Teilen einer Sekunde, insbesondere kontinuierlich durchgeführt wird.

5. Verfahren nach einem der vorhergehenden Ansprüche,
**dadurch gekennzeichnet, dass** die Ultraschallmessung in größeren Zeitabständen als die Strahlungsmessung durchgeführt wird.

6. Verfahren nach einem der vorhergehenden Ansprüche,
**dadurch gekennzeichnet, dass** der Referenzmesswert (R) an einer Messstelle des Walzgutes (4) gemessen wird, an der auch ein Grundmesswert (G) gemessen wird.

7. Verfahren nach einem der vorhergehenden Ansprüche,
**dadurch gekennzeichnet, dass** der Grundmesswert (G) mittels Röntgenstrahlen gemessen wird.

8. Verfahren nach einem der vorhergehenden Ansprüche,
**dadurch gekennzeichnet, dass** bei Abweichungen des Referenzmesswertes (R) vom Grundmesswert (G) innerhalb eines vorgegebenen Toleranzbereichs ein Ist-Wert (I) für die Dicke (d) herausgegeben wird, der aus dem Grundmesswert (G) und dem Referenzmesswert (R) gebildet ist.

9. Vorrichtung (2) zur Bestimmung einer Dicke (d) eines Walzguts (4), insbesondere eines Walzbandes oder einer Metallplatte, beim Walzen des Walzgutes (4) mittels einer Walzstrasse, umfassend
- ein berührungsloses Strahlungsmesssystem (8) zum Erhalten eines Grundmesswerts (G) für die Dicke (d), wobei das Strahlungsmesssystem (8) in der Walzstrasse integriert ist, **gekennzeichnet durch**
- einen ebenfalls in der Walzstrasse integrierten Ultraschall-Messkopf (8) zum Erhalten eines Referenzmesswerts (R) für die Dicke (d),
- sowie eine Analyseeinheit (22) zur Eliminierung von Fehlereinflüssen auf den Grundmesswert (G) anhand des Referenzmesswertes (R).

10. Vorrichtung (2) nach Anspruch 9,
**dadurch gekennzeichnet, dass** eine Strahlungsquelle (12) und ein Strahlungsdetektor (16) des Strahlungsmesssystems (8) an einer Haltemechanik (6) angeordnet sind, wobei der Ultraschall-Messkopfs (24) ebenfalls an der Haltemechanik (4) angeordneten ist.

11. Vorrichtung (2) nach einem der Ansprüche 9 oder 10,
**dadurch gekennzeichnet, dass** der Ultraschall-Messkopf (24) zum Messen der Dicke (d) des Walzgutes (4) zum Walzgut (4) verfahrbar ist.

12. Vorrichtung (2) nach einem der Ansprüche 9 bis 11,
**dadurch gekennzeichnet, dass** das Strahlungsmesssystem (8) dafür eingerichtet ist, in kurzen Zeitabständen von wenigen Sekunden oder Teilen einer Sekunde, insbesondere kontinuierlich zu messen.

13. Vorrichtung (2) nach einem der Ansprüche 9 bis 12,
**dadurch gekennzeichnet, dass** der Ultraschall-Messkopf (24) dafür eingerichtet ist, in größeren Zeitabständen als der Strahlungsmesssystem (8) zu messen.

14. Vorrichtung (2) nach einem der Ansprüche 9 bis 13,
**dadurch gekennzeichnet, dass** der Ultraschall-Messkopf (24) dafür eingerichtet ist, an einer Messstelle des Strahlungsmesssystems (8) zu messen.

15. Vorrichtung (2) nach einem der Ansprüche 9 bis 14,
**dadurch gekennzeichnet, dass** das Strahlungsmesssystem (8) ein Röntgenmesssystem ist.

16. Vorrichtung (2) nach einem der Ansprüche 9 bis 15,
**dadurch gekennzeichnet, dass** die Analyseeinheit (22) dafür eingerichtet ist, bei Abweichungen des Referenzmesswertes (R) vom Grundmesswert (G) innerhalb eines vorgegebenen Toleranzbereichs einen Ist-Wert (I) für die Dicke (d) herauszugeben, der aus dem Grundmesswert (G) und dem Referenzmesswert (R) gebildet ist.

## Claims

1. Method for determining a thickness (d) of rolling stock (4), in particular a rolling strip or a metal plate, during rolling of the rolling stock (4) by means of a rolling mill, wherein
- a base measurement value (G) for the thickness (d) is measured with the aid of a radiation measurement system (8) in contactless fashion, in which case the radiation measurement system (8) is integrated in the rolling mill,
**characterised in that**
- a reference measurement value (R) for the thickness (d) is measured by means of an ultrasonic measurement head (24) which is likewise integrated in the rolling mill, and
- the reference measurement value (R) is used in order to eliminate the influence of errors on the base measurement value (G).

2. Method according to one of the preceding claims,
**characterised in that** a radiation source (12) and a radiation detector (16) of the radiation measurement system (8) are carried by a holding mechanism (6), wherein the ultrasonic measurement head (24) is arranged on the holding mechanism (4).

3. Method according to one of the preceding claims,
**characterised in that** the ultrasonic measurement head (24) for measuring the thickness (d) of the rolling stock (4) is moved towards the rolling stock (4).

4. Method according to one of the preceding claims,
**characterised in that** the radiation measurement by means of the radiation measurement system (8) is performed at short time intervals of a few seconds or fractions of a second, in particular continuously.

5. Method according to one of the preceding claims,
**characterised in that** the ultrasonic measurement is performed at greater time intervals than the radiation measurement.

6. Method according to one of the preceding claims,
**characterised in that** the reference measurement value (R) is measured at a measuring point of the rolling stock (4) at which a base measurement value (G) is also measured.

7. Method according to one of the preceding claims,
**characterised in that** the base measurement value (G) is measured by means of X-ray beams.

8. Method according to one of the preceding claims,
**characterised in that** in the event of deviations of the reference measurement value (R) from the base measurement value (G) within a predefined tolerance range an actual value (I) for the thickness (d) is issued which is formed from the base measurement value (G) and the reference measurement value (R).

9. Device (2) for determining a thickness (d) of rolling stock (4), in particular a rolling strip or a metal plate, during rolling of the rolling stock (4) by means of a rolling mill, comprising
- a contactless radiation measurement system (8) for obtaining a base measurement value (G) for the thickness (d), wherein the radiation measurement system (8) is integrated in the rolling mill,
**characterised by**
- an ultrasonic measurement head (8), which is likewise integrated in the rolling mill, for obtaining a reference measurement value (R) for the thickness (d),
- and also an analysis unit (22) for eliminating the influence of errors on the base measurement value (G) on the basis of the reference measurement value (R).

10. Device (2) according to claim 9,
**characterised in that** a radiation source (12) and a radiation detector (16) of the radiation measurement system (8) are arranged on a holding mechanism (6), wherein the ultrasonic measurement head (24) is likewise arranged on the holding mechanism (4).

11. Device (2) according to one of claims 9 or 10,
**characterised in that** the ultrasonic measurement head (24) for measuring the thickness (d) of the rolling stock (4) can be moved towards the rolling stock (4).

12. Device (2) according to one of claims 9 to 11,
**characterised in that** the radiation measurement system (8) is set up to measure at short time intervals of a few seconds or fractions of a second, in particular continuously.

13. Device (2) according to one of claims 9 to 12,
**characterised in that** the ultrasonic measurement head (24) is set up to measure at greater time intervals than the radiation measurement system (8).

14. Device (2) according to one of claims 9 to 13,
**characterised in that** the ultrasonic measurement head (24) is set up to measure at a measuring point of the radiation measurement system (8).

15. Device (2) according to one of claims 9 to 14,
**characterised in that** the radiation measurement system (8) is an X-ray measurement system.

16. Device (2) according to one of claims 9 to 15,
**characterised in that** the analysis unit (22) is set up in the event of deviations of the reference measurement value (R) from the base measurement value (G) within a predefined tolerance range to issue an actual value (I) for the thickness (d) which is formed from the base measurement value (G) and the reference measurement value (R).

## Revendications

1. Procédé de détermination d'une épaisseur (d) d'un produit (4) à laminer, notamment d'un feuillard ou d'une plaque métallique, lors du laminage du produit (4) à laminer au moyen d'un train de laminoir, dans lequel
- on mesure sans contact une valeur (G) de mesure de base de l'épaisseur (d) à l'aide d'un système (8) de mesure de rayonnement, le système (8) de mesure de rayonnement étant intégré au train de laminoir,
**caractérisé en ce que**
- on mesure une valeur (R) de référence de l'épaisseur (d) à l'aide d'une tête (24) de mesure à ultrasons, qui est intégrée également au train de laminoir et
- on tire parti de la valeur (R) de mesure de référence pour éliminer des influences d'erreur sur la valeur (G) de mesure de base.

2. Procédé suivant l'une des revendications précédentes,
**caractérisé en ce qu'**on fait porter une source (12) de rayonnement et un détecteur (16) de rayonnement du système (8) de mesure de rayonnement par un mécanisme (6) de maintien, la tête (24) de mesure à ultrasons étant montée sur le mécanisme (4) de maintien.

3. Procédé suivant l'une des revendications précédentes,
**caractérisé en ce qu'**on déplace la tête (24) de mesure à ultrasons par rapport au produit (4) à laminer pour mesurer l'épaisseur (d) du produit (4) à laminer.

4. Procédé suivant l'une des revendications précédentes,
**caractérisé en ce qu'**on effectue la mesure du rayonnement à l'aide du système (8) de mesure de rayonnement à des intervalles de temps brefs de quelques secondes ou de quelques fractions de seconde, notamment en continu.

5. Procédé suivant l'une des revendications précédentes,
**caractérisé en ce qu'**on effectue la mesure par ultrasons à des intervalles de temps plus grands que la mesure du rayonnement.

6. Procédé suivant l'une des revendications précédentes,
**caractérisé en ce qu'**on mesure la valeur (R) de référence en un point de mesure du produit (4) à laminer, où on mesure aussi la valeur (G) de mesure de base.

7. Procédé suivant l'une des revendications précédentes,
**caractérisé en ce qu'**on mesure la valeur (G) de mesure de base au moyen de rayons X.

8. Procédé suivant l'une des revendications précédentes,
**caractérisé en ce que**, si la valeur (R) de mesure de référence s'écarte de la valeur (G) de mesure de base dans une plage de tolérance donnée à l'avance, on émet une valeur (I) réelle de l'épaisseur (d), qui est formée à partir de la valeur (G) de mesure de base et de la valeur (R) de mesure de référence.

9. Dispositif (2) de détermination d'une épaisseur (d) d'un produit (4) à laminer, notamment d'un feuillard ou d'une plaque métallique, lors du laminage du produit (4) à laminer au moyen d'un train de laminoir, comprenant :
- un système (8) sans contact de mesure de rayonnement, pour obtenir une valeur (G) de mesure de base de l'épaisseur (d), le système (8) de mesure de rayonnement étant intégré au train de laminoir,
**caractérisé par**
- une tête (8) de mesure à ultrasons intégrée également au train de laminoir, pour obtenir une valeur (R) de mesure de référence de l'épaisseur (d),
- ainsi qu'une unité (22) d'analyse, pour éliminer des influences d'erreur sur la valeur (G) de mesure de base à l'aide de la valeur (R) de mesure de référence.

10. Dispositif (2) suivant la revendication 9,
**caractérisé en ce qu'**une source (12) de rayonnement et un détecteur (16) de rayonnement du système (8) de mesure de rayonnement sont montés sur un mécanisme (6) de maintien, la tête (8) de mesure à ultrasons étant montée également sur le mécanisme (4) de maintien.

11. Dispositif (2) suivant l'une des revendications 9 ou 10,
**caractérisé en ce que** la tête (24) de mesure à ultrasons peut être déplacée par rapport au produit (4) à laminer, pour mesurer l'épaisseur (d) du produit (4) à laminer.

12. Dispositif (2) suivant l'une des revendications 9 à 11,
**caractérisé en ce que** le système (8) de mesure de rayonnement est conçu pour mesurer à des intervalles de temps brefs de quelques secondes ou fractions de seconde, notamment en continu.

13. Dispositif (2) suivant l'une des revendications 9 à 12,
**caractérisé en ce que** la tête (24) de mesure à ultrasons est conçue pour mesurer à des intervalles de temps plus grands que le système (8) de mesure de rayonnement.

14. Dispositif (2) suivant l'une des revendications 9 à 13,
**caractérisé en ce que** la tête (24) de mesure à ultrasons est conçue pour mesurer en un point de mesure du système (8) de mesure de rayonnement.

15. Dispositif (2) suivant l'une des revendications 9 à 14,
**caractérisé en ce que** le système (8) de mesure de rayonnement est un système de mesure à rayons X.

16. Dispositif (2) suivant l'une des revendications 9 à 15,
**caractérisé en ce que** l'unité (22) d'analyse est conçue pour, si la valeur (R) de mesure de référence s'écarte de la valeur (G) de mesure de base dans une plage de tolérance donnée à l'avance, émettre une valeur (I) réelle de l'épaisseur (d), qui est formée à partir de la valeur (G) de mesure de base et de la valeur (R) de mesure de référence.
